# EUROPÄISCHE PATENTSCHRIFT

(11) **EP 2 467 927 B1**
(45) Veröffentlichungstag und Bekanntmachung des Hinweises auf die Patenterteilung: **07.05.2014**
(21) Anmeldenummer: 10744566.0
(22) Anmeldetag: 13.08.2010
(51) Int. Cl.: H02M 1/36, H02M 7/12

(54) **VERFAHREN ZUM ENTLADEN EINES ZWISCHENKREISKONDENSATORS EINES SPANNUNGSZWISCHENKREIS-UMRICHTERS**
METHOD FOR DISCHARGING A DC LINK CAPACITOR OF A CONVERTER WITH DC LINK
METHODE DE DECHARGE DU CONDENSATEUR DE BUS DC D'UN CONVERTISSEUR AVEC UN BUS DC

(30) Priorität: 17.08.2009 DE 102009037723
(43) Veröffentlichungstag der Anmeldung: 27.06.2012
(73) Patentinhaber: Siemens Aktiengesellschaft, 80333 München (DE)
(72) Erfinder: ACKERMANN, Markus, 91301 Forchheim (DE); AMLER, Gerald, 90475 Nürnberg (DE); NAGEL, Andreas, 90478 Nürnberg (DE)
(86) Internationale Anmeldenummer: PCT/EP2010/061816
(87) Internationale Veröffentlichungsnummer: WO 2011/020786

(56) Entgegenhaltungen:
- WO-A1-2010/022765
- US-A1- 2004 160 792
- US-A1- 2009 152 950

## Beschreibung

Die Erfindung bezieht sich auf ein Verfahren zum Entladen eines Zwischenkreiskondensators eines Spannungszwischenkreis-Umrichters, dessen netzseitiger Stromrichter abschaltbare Leistungshalbleiter aufweist und mittels einer mittels eines Netzschützes überbrückbaren Reihenschaltung eines Ladeschützes und eines Vorladewiderstandes, eines Transformators und eines Hauptschalters mit einem speisenden Wechselspannungsnetz verbindbar ist.

Bei Spannungszwischenkreis-Umrichter ist eine Vorladeschaltung generell vorhanden. Mit dieser Vorladeschaltung wird der Zwischenkreiskondensator geladen. Durch die Wahl des Vorladewiderstandes wird der Ladestrom eingestellt. Dieser Ladestrom darf einen maximalen Diodenstrom der Inversdiode der abschaltbaren Leistungshalbleiter des netzseitigen Stromrichters nicht überschreiten. Wäre kein Vorwiderstand vorhanden, würde sich ein Ladestrom einstellen, der die maximale Stromtragfähigkeit der netzseitigen Dioden überschreiten würde. Die Folge wäre eine Zerstörung dieser Dioden. Sobald beispielsweise 80% des maximalen Ladezustandes des Zwischenkreiskondensators erreicht ist, wird der Vorladewiderstand mittels eines Netzschützes überbrückt. Dadurch ist der netzseitige Stromrichter mittels eines Netztransformators mit einem speisenden Wechselspannungsnetz verbunden.

Für Wartungszwecke bzw. bei der Beseitigung von Fehlern muss sichergestellt werden, dass der Zwischenkreiskondensator nach Abschaltung des Spannungszwischenkreis-Umrichters in relativ kurzer Zeit entladen ist. Zumindest sollte die am Zwischenkreiskondensator abfallende Spannung nicht größer sein als 60V Gleichspannung. Dadurch können beim Wartungspersonal bei Berührung dieser Gleichspannung keine gefährlichen Körperströme zum Fließen gebracht werden.

Bei den im Handel erhältlichen Spannungszwischenkreis-Umrichtern wird der Zwischenkreiskondensator mittels eines schaltbaren Widerstandes entladen. Dieser Widerstand wird elektrisch parallel zum Zwischenkreiskondensator geschaltet. Für die Entladung werden somit zusätzliche Bauelemente, wie ein Schütz bzw. ein abschaltbarer Leistungshalbleiter und ein Widerstand, benötigt.

Aus der DE 10 2007 047 713 A1 ist ein Verfahren zur Entladung eines Hochspannungsnetzes bekannt, dass den vorhandenen Vorladewiderstand dazu verwendet. Die Schaltung, die einen Gleichspannungskondensator aufweist, ist ein in einem Hybridfahrzeug vorhandenes Hochspannungsnetz. Dieses Hochspannungsnetz besteht im einfachsten Fall aus einer Batterie, einem Spannungsumrichter mit Gleichspannungskondensator, einer oder mehrerer elektrischer Maschinen, weitere Hochspannungsverbraucher und einem Kabelbaum, der alle Hochspannungskomponenten miteinander elektrisch leitend verbindet. Die Hochspannungsbatterie ist mittels einer überbrückbaren Reihenschaltung eines Vorladewiderstandes und eines Schalters mit einem positiven Pol des Gleichspannungskondensators verbindbar. Der negative Pol dieses Gleichspannungskondensators ist mittels eines weiteren Schalters oder auch direkt mit einem negativen Pol der Hochspannungsbatterie verbindbar. Für den Entladevorgang kommt ein Entladeschütz zum Einsatz, welches ebenfalls über einen einfachen Schließkontakt bzw. Schalter verfügt. Dieses Entladeschütz ist derart mit dem Vorladewiderstand verschaltet, dass bei geschlossenen Kontakten dieses Entladeschützes der Vorladewiderstand elektrisch parallel zum Gleichspannungskondensator geschaltet ist.

Durch diese Maßnahme wird die bekannte Entladeschaltung auf ein Schütz beschränkt, da der Vorladewiderstand nicht nur zu Ladungszwecken, sondern auch zu Entladungszwecken verwendet wird. Durch die Dimensionierung des Vorladewiderstandes wird eine Entladung des Gleichspannungskondensators deutlich schneller als mit einer separaten Entladeschaltung erreicht. Obwohl sich der Aufwand der Entladeschaltung sehr verringert hat, wird immer noch ein zusätzliches Bauelement, nämlich ein Schütz, benötigt, das einen entsprechenden Einbauplatz beansprucht und mit der Schaltung, die einen Gleichspannungskondensator aufweist, verschaltet werden muss.

Als Stand der Technik ist auch US 2004/0160792 bekannt.

Der Erfindung liegt nun die Aufgabe zugrunde, ein Verfahren anzugeben, mit der ein Zwischenkreiskondensator eines eingangs beschriebenen Spannungszwischenkreis-Umrichters entladen werden kann.

Diese Aufgabe wird mit den Verfahrensschritten des Anspruchs 1 erfindungsgemäß gelöst.

Dadurch, dass ein Hauptschalter und ein Netzschütz geöffnet werden, wobei gleichzeitig das vorhandene Vorladeschütz und zwei diagonal gegenüberliegende abschaltbare Leistungshalbleiter des netzseitigen Stromrichters eingeschaltet werden, ist der Vorladewiderstand elektrisch parallel zum Zwischenkreiskondensator geschaltet. Dadurch wird der Vorladewiderstand auch bei der Entladung des Zwischenkreiskondensators eines Spannungszwischenkreis-Umrichters verwendet, ohne dass ein zusätzliches Schütz bzw. Schalter vorgesehen werden muss. D.h., bei der Entladung des Zwischenkreiskondensators eines eingangs beschriebenen Spannungszwischenkreis-Umrichters werden die vorhandenen Bauelemente verwendet.

Zur weiteren Erläuterung der Erfindung wird auf die Zeichnung Bezug genommen, in der zwei Ausführungsformen eines Spannungszwischenkreis-Umrichters schematisch dargestellt sind.
- FIG 1: zeigt eine einphasige Einspeisung mit Transformator eines Spannungszwischenkreis-Umrichters, wogegen in der
- FIG 2: eine dreiphasige Einspeisung mit Transformator eines Spannungszwischenkreis-Umrichters dargestellt ist.

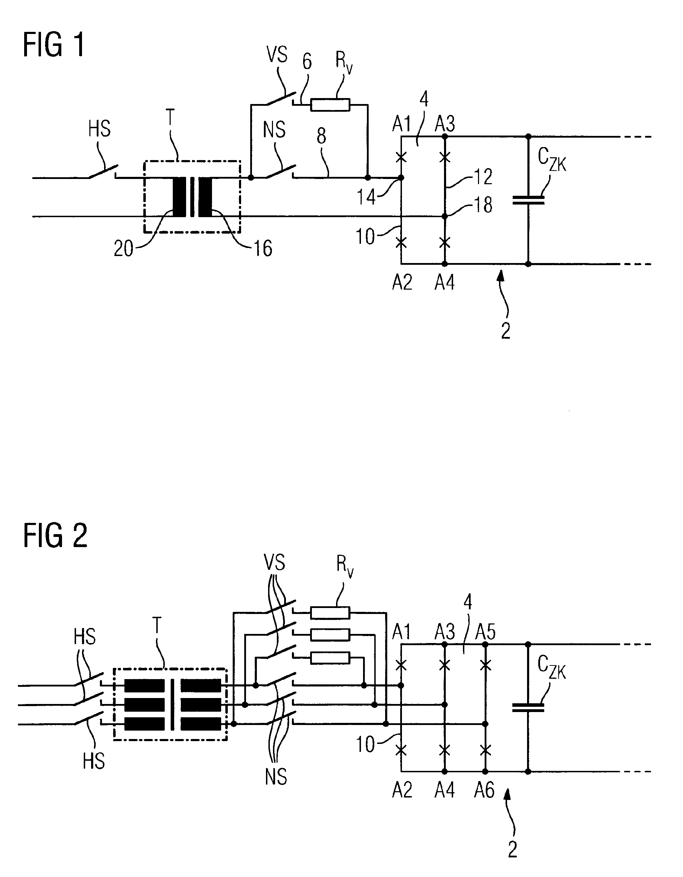

In der FIG 1 ist von einem Spannungszwischenkreis-Umrichter 2 nur der Spannungszwischenkreis mit einem Zwischenkreiskondensator C_{ZK} und ein netzseitiger Stromrichter 4 dargestellt.

Der lastseitige Stromrichter mit einer daran angeschlossenen Last ist aus Übersichtlichkeitsgründen nicht näher dargestellt. Der Spannungszwischenkreis-Umrichter 2 ist mittels weiterer Bauelemente mit einem einphasigen Wechselspannungsnetz verbindbar. Zu diesen zusätzlichen Bauelementen zählen eine Vorladeschaltung 6, eine Überbrückungsschaltung 8, ein Transformator T zur Potentialtrennung und ein Hauptschalter HS. Wegen der Anbindung des Spannungszwischenkreis-Umrichters 2 an ein einphasiges Wechselspannungs-Netz weist der netzseitige Stromrichter 4 nur zwei Brückenzweige 10 und 12 auf, die jeweils zwei elektrisch in Reihe geschaltete abschaltbare Leistungshalbleiter A1, A2 und A3, A4 aufweisen. Am wechselspannungsseitigen Anschluss 14 des Brückenzweiges 10 ist mittels der Überbrückungsschaltung 8 ein Anschluss einer Sekundärwicklung 16 des Transformators T angeschlossen. Der zweite Anschluss dieser Sekundärwicklung 16 ist direkt mit einem wechselspannungsseitigen Anschluss 18 des Brückenzweiges 12 des netzseitigen Stromrichters 4 verknüpft. Elektrisch parallel zur Überbrückungsschaltung 8 ist die Vorladeschaltung 6 geschaltet. Diese Vorladeschaltung 6 weist ein Vorladeschütz VS und einen Vorladewiderstand Rᵥ auf. Vorladeschütz VS und Vorladewiderstand Rᵥ sind elektrisch in Reihe geschaltet. Die Überbrückungsschaltung 8 weist nur ein Netzschütz NS auf. Die Primärwicklung 20 des Transformators T ist mittels eines Hauptschalters HS mit einem nicht näher dargestellten Wechselspannungsnetz verbindbar.

Wenn dieser Spannungszwischenkreis-Umrichter 2 an ein einphasiges Wechselspannungsnetz angeschlossen wird, werden der Hauptschalter HS und das Vorladeschütz VS geschlossen. Dadurch ist ein Strompfad geschaltet, über dem ein Ladestrom fließt, der den Zwischenkreiskondensator C_{ZK} auflädt. Sobald beispielsweise 80% des maximalen Ladezustandes dieses Zwischenkreiskondensators C_{ZK} erreicht ist, wird das Netzschütz NS geschlossen. Dadurch ist die Vorladeschaltung 6 überbrückt. Das Vorladeschütz VS kann anschließend stromlos geöffnet werden.

Bei der Entladung des Zwischenkondensators C_{ZK} des Spannungszwischenkreis-Umrichters 2 wird wie folgt vorgegangen:

Zunächst wird der Spannungszwischenkreis-Umrichter 2 von einem speisenden Wechselspannungsnetz getrennt, in dem der Hauptschalter HS geöffnet wird. Anschließend werden das Netzschütz NS geöffnet und das Vorladeschütz VS geschlossen. Dadurch ist der Vorladewiderstand Rᵥ zusammen mit der Sekundärwicklung 16 des Transformators T elektrisch parallel zu den wechselspannungsseitigen Anschlüssen 14 und 18 des netzseitigen Stromrichters 4 geschaltet. Damit der Vorladewiderstand Rᵥ elektrisch parallel zum Zwischenkreiskondensator C_{ZK} des Spannungszwischenkreis-Umrichters geschaltet ist, müssen nur noch zwei von vier abschaltbaren Leistungshalbleiter des netzseitigen Stromrichters 4 eingeschaltet werden. Entweder werden die abschaltbaren Leistungshalbleiter A1 und A4 oder die abschaltbaren Leistungshalbleiter A2 und A3 eingeschaltet. Nachdem der Zwischenkreiskondensator C_{ZK} entladen ist, wird das Vorladeschütz VS geöffnet und die eingeschalteten abschaltbaren Leistungshalbleiter A1, A4 bzw. A3, A2 wieder ausgeschaltet.

Mit diesem erfindungsgemäßen Verfahren kann ein Zwischenkreiskondensator C_{ZK} eines dargestellten Spannungszwischenkreis-Umrichters 2 mit Hilfe des vorhandenen Vorladewiderstandes Rᵥ entladen werden, ohne dass ein Entladeschütz mehr vorgesehen werden muss.

In der FIG 2 ist ein Spannungszwischenkreis-Umrichter 2 für den Anschluss an ein nicht näher dargestelltes dreiphasiges Wechselspannungsnetz dargestellt. Diese Ausführungsform unterscheidet sich von der Ausführungsform gemäß FIG 1 dadurch, dass der netzphasige Stromrichter 4 nun drei Brückenzweige aufweist. Als Transformator T ist ebenfalls ein Drehstromtransformator vorgesehen. Auch der Hauptschalter HS, das Netzschütz NS und das Vorladeschütz VS sind jeweils dreiphasige ausgebildet. Anstelle von einem Vorladewiderstand Rᵥ werden bei der Ausführungsform gemäß FIG 2 drei Vorladewiderstände Rᵥ verwendet. Trotz der geänderten Ausführungsform hat sich am Verfahren zur Entladung des Zwischenkreiskondensators C_{ZK} nichts geändert.

## Patentansprüche

1. Verfahren zum Entladen eines Zwischenkreiskondensators (C_{ZK}) eines Spannungszwischenkreis-Umrichters (2), dessen netzseitiger Stromrichter (4) abschaltbare Leistungshalbleiter (A1,...,A6) aufweist und mittels einer mittels eines Netzschützes (NS) überbrückbaren Reihenschaltung eines Vorladeschützes (VS) und eines Vorladewiderstandes (R_{V}), eines Transformators (T) und eines Hauptschalters (HS) mit einem speisenden Wechselspannungsnetz verbindbar ist, wobei der Hauptschalter (HS) und das Netzschütz (NS) geöffnet werden, wobei das Vorladeschütz (VS) geschlossen wird und wobei zwei diagonal gegenüberliegende abschaltbare Leistungshalbleiter (A1,A4;A2,A3) des netzseitigen Stromrichters (4) eingeschaltet werden.

2. Verfahren nach Anspruch 1, **dadurch gekennzeichnet, dass** beim Erreichen eines vorbestimmten verringerten Ladezustandes des Zwischenkreiskondensators (C_{ZK}) das Vorladeschütz (VS) geöffnet und die beiden eingeschalteten abschaltbaren Leistungshalbleiter (A1,A4;A2,A3) des netzseitigen Stromrichters (4) des Spannungszwischenkreis-Umrichters (2) ausgeschaltet werden.

## Claims

1. Method for discharging a DC link capacitor (C_{ZK}) of a voltage link converter (2) of which the power converter (4) on the line side has disconnectable power semiconductors (A1,...,A6) and is able to be connected to an AC power supply network by means of a series circuit of a pre-charging contactor (VS) and a pre-charging resistor (R_{V}) able to be bridged by means of a line contactor (NS), a transformer (T) and a main switch (HS), wherein the main switch (HS) and the line contactor (NS) are opened, wherein the pre-charging contactor (VS) is closed and wherein two diagonally opposite disconnectable power semiconductors (A1, A4; A2, A3) of the power converter (4) on the line side are switched on.

2. Method according to claim 1, **characterised in that**, on reaching a predetermined reduced charge state of the DC link capacitor (C_{ZK}), the pre-charging contactor (VS) is opened and the two switched-on disconnectable power semiconductors (A1, A4; A2, A3) of the power converter (4) on the line side of the voltage link converter (2) are switched off.

## Revendications

1. Procédé de décharge d'un condensateur (C_{ZK}) du circuit intermédiaire d'un convertisseur ( 2 ) à circuit intermédiaire de tension, dont le convertisseur ( 4 ) de courant, du côté du réseau, a des semi-conducteurs ( A1, ..., A6 ) de puissance pouvant être bloqués et peut être relié à un réseau de tension alternative d'alimentation, au moyen d'un circuit série, pouvant être shunté au moyen d'un contacteur ( NS ) de réseau, d'un contacteur ( VS ) de pré-charge et d'une résistance ( R_{V} ) de pré-charge, d'un transformateur ( T ) et d'un commutateur ( HS ) principal, dans lequel on ouvre le commutateur ( HS ) principal et le contacteur ( NS ) de secteur, dans lequel on ferme le contacteur ( VS ) de pré-charge et dans lequel on met à l'état passant deux semi-conducteurs ( A1, A4 ; A2, A3 ) de puissance, pouvant être bloqués en opposition en diagonal, du convertisseur ( 4 ) de courant du côté du secteur.

2. Procédé suivant la revendication 1, **caractérisé en ce que**, lorsqu'un état de charge diminué et déterminé à l'avance du condenseur ( C_{ZK} ) du circuit intermédiaire est atteint, on ouvre le contacteur ( VS ) de pré-charge et on met à l'état bloqué les deux semi-conducteurs ( A1, A4 ; A2, A3 ) de puissance, mis à l'état passant et pouvant être bloqués, du convertisseur ( 4 ) de courant du côté du secteur du convertisseur ( 2 ) à circuit intermédiaire de tension.
